(19) Europäisches Patentamt
European Patent Office
Office européen des brevets

(11) Veröffentlichungsnummer: **0 227 181**
**B1**

(12) # EUROPÄISCHE PATENTSCHRIFT

(45) Veröffentlichungstag der Patentschrift: **03.10.90**

(51) Int. Cl.⁵: **C01B 11/02**

(21) Anmeldenummer: **86202279.5**

(22) Anmeldetag: **16.12.86**

(54) **Reaktor für die Herstellung von Chlordioxid.**

(30) Priorität: **24.12.85 DE 3546010**

(43) Veröffentlichungstag der Anmeldung: **01.07.87 Patentblatt 87/27**

(45) Bekanntmachung des Hinweises auf die Patenterteilung: **03.10.90 Patentblatt 90/40**

(84) Benannte Vertragsstaaten: **AT DE FR SE**

(56) Entgegenhaltungen:
**EP-A- 0 094 718**
**EP-A- 0 095 199**
**DE-A- 3 118 795**

(73) Patentinhaber: **Lohrberg, Karl, Breslauer Strasse 1, D-6056 Heusenstamm(DE)**

(72) Erfinder: **Lohrberg, Karl, Breslauer Strasse 1, D-6056 Heusenstamm(DE)**

(74) Vertreter: **Keil, Rainer A., Dipl.-Phys. Dr. et al, KEIL & SCHAAFHAUSEN Patentanwälte Eysseneckstrasse 31, D-6000 Frankfurt am Main 1(DE)**

EP 0 227 181 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Reaktor für die Herstellung von Chlordioxid aus Natriumchlorat durch Umsetzung mit einer Säure, wie Chlorwasserstoffsäure, unter Verwendung eines Spülgas-Gegenstromes, mit mehreren übereinander angeordneten und mit Öffnungen versehen, die Rückvermischung von Gas und Flüssigkeit verhindernden Einbauten.

Reaktionen zwischen Gasen und Flüssigkeiten werden in den meisten Fällen im Gegenstrom geführt. Bei relativ großen Flüssigkeitsmengen und großen Gasmengen wendet man u.a. mit Füllkörpern beschickte Türme an, die im Gegenstrom zum Gas mit der Flüssigkeit berieselt werden. Bei kleinen Flüssigkeitsmengen im Verhältnis zum Gas wendet man u.a. Glockenböden oder ähnliche Einbauten an. Schwieriger wird die Optimierung solcher Apparate, wenn das Gas aus in der Flüssigkeit enthaltenen Komponenten gebildet wird. In solchen Fällen muß die Bildungsgeschwindigkeit des Gases bei der apparativen Auslegung des Reaktors berücksichtigt werden. Neben dem Volumen-Verhältnis Gas/Flüssigkeit ist dann auch die Reaktionsgeschwindigkeit einer chemischen Umsetzung, die zur Gasentwicklung führt, zu berücksichtigen. Soll die Reaktion trotzdem im Gegenstrom zum Gas geführt werden, hat man bereits in bekannter Weise Kaskaden aus mehreren Reaktionsbehältern angewendet, die entweder seitlich versetzt oder senkrecht übereinander angeordnet worden sind (DE-B 924 689). Bei einer Anordnung senkrecht übereinander sind die einzelnen Behälter oder Reaktionskammern durch z.B. abgetauchte Flüssigkeitsüberläufe und durch Gastauchungen, die im Prinzip einer großen Glocke eines Glockenbodens entsprechen, miteinander verbunden worden (DE-A-3 118 795).

Die EP-A-0 094 718 zeigt und beschreibt einen Reaktor für die Herstellung von Chlordioxid, bei dem zur Verbesserung der Reaktionseffektivität durch Hemmung der Vermischung der gesamten Reaktionslösung horizontal angeordnete, profilierte Trennboden-Bleche eingebaut sind, deren Erhebungen und Vertiefungen mit Durchtrittsöffnungen versehen sind. Als nachteilig erweist sich bei diesem Reaktor der relativ große Konstruktionsaufwand, der zudem nur zu einer vergleichsweise geringen Verbesserung des Wirkungsgrades des Reaktors führt.

Eine ähnliche Anordnung ist auch aus der EP-A-0 095 199 bekannt. Dort ist ein Reaktor mit senkrecht übereinander angeordneten Reaktionskammern gezeigt und beschrieben, deren jeweiligen Böden zur Reaktormitte hin kegelmantelförmig ansteigen und mit kegelförmigen Gastauchungen überdeckt sind. Der Wirkungsgrad dieses bekannten Reaktors wird durch den während der Reaktion stattfindenden Konzentrationsausgleich negativ beeinflußt.

Ein typisches Beispiel einer Gas durch chemische Umsetzung bildenden Reaktion ist die Erzeugung von Chlordixoid durch Einwirken von Säure, wie Chlorwasserstoffsäure, auf Natriumchlorat, wobei ein Spül- oder Verdünnungsgas im Gegenstrom geführt wird.

Bei diesem Prozeß laufen folgende Vorgänge ab:

1. Bildung von $ClO_2$:

Hierbei sind zwei Reaktionen möglich, die auch in der praktischen Durchführung ablaufen, wobei die Reaktion 1.2 möglichst unterdrückt werden sollte:

1.1 $NaClO_3 + 2\ HCl \rightarrow ClO_2 + 1/2\ Cl_2 + NaCl + H_2O$

1.2 $NaClO_3 + 6\ HCl \rightarrow 3\ Cl_2 + NaCl + 3\ H_2O$

Bei der Erzeugung von $ClO_2$ nach diesem Verfahren sind folgende Bedingungen zu berücksichtigen:

a) Das Verhältnis $NaClO_3$ zu HCl muß groß sein, um die Reaktion 1.1 zu favorisieren (siehe Swindell Pulping Conference, 1984, S. 195 ff.),

b) Die Konzentrationen von $NaClO_3$ und HCl müssen möglichst hoch sein, um die Bildung von $ClO_2$ zu beschleunigen, da die Bildungsgeschwindigkeit des $ClO_2$ direkt proportional dem Produkt aus HCl-Konzentration und $NaClO_3$-Konzentration ist. Reaktionszeiten von einigen Stunden sind erforderlich, wenn die gesamte Säure und das gesamte Chlorat reagieren sollen.

Es ist bekannt, daß nicht die Salzsäurekonzentration der eigentlich beeinflussende Faktor ist, sondern die $H^+$-Ionenkonzentration. Diese hat man durch Zugabe von Pufferlösungen zu steuern versucht (siehe US-A-4 086 328).

Auf die Eigenschaft des $Na_2Cr_2O_7$ als Puffersubstanz sind auch die bei Swindell angeführten besseren Wirkungsgrade in Anwesenheit dieses Stoffes zurückzuführen. Demzufolge kann grundsätzlich und bekannterweise jede Säure in Kombination mit einem Reduktionsmittel zur Erzeugung von $ClO_2$ aus $NaClO_3$ benutzt werden, z.B.:

$NaClO_3 + NaCl + H_2SO_4 \rightarrow ClO_2 + 1/2\ Cl_2 + Na_2SO_4 + H_2O$
oder
$2\ NaClO_3 + SO_2 \rightarrow 2\ ClO_2 + Na_2SO_4$,

wobei lediglich einmal $H_2SO_4$ vorgelegt werden muß.

2. Ausblasen von $ClO_2$:

Da Chlordioxid eine gasförmige chemische Verbindung ist, die sich in zu hoher Konzentration explosionsartig zersetzt, muß der Partialdruck zur Vermeidung von Explosionen herabgesetzt werden. Das geschieht entweder durch Einstellen eines verminderten Druckes oder Verdünnung mit einem anderen Gas oder einer Kombination von beiden. Das Ausblasen des $ClO_2$-Gases geschieht in Sekunden oder wenigen Minuten.

3. Durchführung der Reaktion:

Sowohl die geforderte hohe Säure-Konzentration als auch das Ausblasen des $ClO_2/Cl_2$-Gases verlangen idealerweise einen Gegenstromprozeß.

Bekannte Arbeitsweisen werden beispielsweise in einem Reaktor gemäß Fig. 1 durchgeführt, in welchem Reaktor die Reaktionsräume 5 hydraulisch voneinander getrennt sind.

Am Kopf des Reaktors werden über eine Leitung 3 Chlorwasserstoffsäure und über einen Zulauf 7 eine wässrige Natriumchloratlösung eingeführt. Über einen Eintritt 1 wird ein Verdünnungs- bzw. Spülgas, z.B. Luft, eingesaugt, und über einen Austritt 4 verlassen die Reaktionsprodukte Chlordioxid und Chlor sowie die Verdünnungsgase den Reaktor. In den übereinanderliegenden horizontalen Ebenen sind Glocken 6 mit Flüssigkeitsüberläufen 2 vorgesehen. Die verbrauchte Reaktionslösung wird über einen Ablauf 3 abgezogen. Die Reaktionsräume 5.1 bis 5.4 sind flüssigkeitsseitig und gasseitig durch Tauchungen getrennt, wobei für die Gastauchung die Glocken 6 dienen. Demzufolge herrscht in jedem der Reaktionsräume 5.1 bis 5.4 die Ablaufkonzentration, d.h. die Anfangskonzentrationen an Säure und $NaClO_3$ werden sofort herabgesetzt, ohne für eine optimale Reaktion genutzt worden zu sein.

Dieses sei an einigen Beispielen erläutert:

3.1 In einem 4-stufigen Reaktor mit Kochstufe soll eine Lösung mit 450 g/l $NaClO_3$ mit einer Salzsäure von 380 g/l so umgesetzt werden, daß beide Reaktanden praktisch ausreagieren. Unter Berücksichtigung der Reaktion 1.2 müssen dann 1 l Chloratlösung mit ca. 0,9 l Salzsäurelösung vermischt werden. Damit ergeben sich am Eintritt, ohne daß eine Reaktion stattgefunden hat, folgende Konzentrationen:

$NaClO_3$: 237 g/l
HCl: 200 g/l

Da in der 1. Stufe aufgrund der hohen Konzentrationen an $NaClO_3$ und HCl bereits ca. 50 % abreagieren, liegen die tatsächlichen Konzentrationen in der 1. Stufe bei

180 g/l $NaClO_3$ und 100 g/l HCl.

Durch diese sofortige Verdünnung geht ein großer Teil der die Reaktion treibenden Kraft verloren. Eine Vergrößerung der Stufenzahl wäre also wünschenswert.

3.2 Die gleichen Überlegungen führen zu dem Ergebnis, daß bei einem einstufigen Reaktor die Verweilzeit unerträglich groß sein müßte, wenn Säure und Chlorat völlig reagieren sollen, da dann die Konzentrationen im Reaktor gegen Null gehen müßten. Um dieses zu vermeiden, arbeitet man bei einstufigen Reaktoren mit Kristallisationsreaktoren, um die jeweiligen, nicht gasförmigen Reaktionsprodukte unabhängig von der Konzentration der Reaktanden, d.h. in fester Form austragen zu können. Diese Kristallisation ist aber unerwünscht, da die Kristallisationsprodukte anschließend in den meisten Fällen wieder aufgelöst werden müssen. Außerdem führt der Vorgang der Kristallisation an sich zu Ansätzen und Ablagerungen im Reaktor, die in regelmäßigen Abständen zum Stillsetzen und Auswaschen des Reaktors führen.

Hiervon ausgehend liegt der Erfindung die Aufgabe zugrunde, die genannten Nachteile der vorbekannten Reaktoren und weitere Nachteile zu beseitigen und einen Reaktor für verbesserte Reaktionsbedingungen für Gas/Flüssigkeit-Reaktionen zur Verfügung zu stellen.

Die Erfindung löst die Aufgabe mit einem Reaktor für die Herstellung von Chlordioxid aus Natriumchlorat durch Umsetzen mit einer Säure, wie Chlorwasserstoffsäure und einem Reduktionsmittel unter Verwendung eines Spülgas-Gegenstromes, mit mehreren übereinander angeordneten und mit Öffnungen versehenen, die Rückvermischung von Gas und Flüssigkeit hindernden Einbauten, indem die Einbauten als in horizontalen Ebenen angeordnete Glocken gestaltet sind, deren Flüssigkeitsräume durch senkrechte Trennbleche in Reaktionssegmente unterteilt sind.

Das Trennblech zwischen Ein- und Auslauf bzw. den Überläufen ist flüssigkeitsdicht, während die anderen Trennbleche am Boden mit Durchtrittsöffnungen für die Flüssigkeit versehen sind.

Durch die Erfindung wird bewirkt, daß der Reaktor in eine beliebige Anzahl von Reaktionsräumen und -segmenten durch Einbau einer entsprechenden beliebigen Anzahl von Böden und Trennblechen aufgeteilt bzw. getrennt wird, welche die Vermischung der Reaktionslösung hemmen bzw. hindern.

In dem erfindungsgemäßen Reaktor werden mindestens zwei und vorteilhaft eine Vielzahl z.B. zwölf Glocken angeordnet, zweckmäßig über die gesamte Höhe des Reaktors gleichmäßig verteilt. Die

Glocken können mit gleichen oder unterschiedlichen Höhen ausgerüstet werden. Bei unterschiedlichen Höhen ergeben sich unterschiedliche Verweilzeiten der Reaktionsflüssigkeit.

Die Anzahl der Trennbleche pro Glocke muß mindestens zwei sein, soll aber vier nicht wesentlich überschreiten.

Versieht man den Reaktor erfindungsgemäß mit einem einzigen Zulauf für die Chloratdosierung, einer einzigen Reduktionsmitteldosierstelle, falls die Säure nicht auch als Reduktionsmittel wirkt, und einer Säuredosierstelle pro Reaktionssegment, dann ergeben sich folgende zusätzlichen Vorteile:

- die Chloratlösung durchläuft die Reaktionssegmente nacheinander,
- das Produkt aus Chlorat- und Säurekonzentration ist zumindest in den Anfangssegmenten ausreichend hoch, um eine hinreichende Reaktionsgeschwindigkeit zu gewährleisten,
- der Quotient aus Chlorat- und Säurekonzentration ist zumindest in den Anfangssegmenten ausreichend hoch, um einen Wirkungsgrad von mehr als 90% insgesamt zu erreichen.

Die Erfindung wird anhand der Zeichnung näher erläutert.

Es zeigen:

Fig. 1 in schematischer Darstellung einen Längsschnitt durch einen herkömmlichen Reaktor,

Fig. 2 in schematischer Darstellung Querschnitte in unterschiedlichen horizontalen Ebenen eines Reaktors durch die Reaktionsräume mit jeweils einer Vielzahl von Segmenten pro Reaktionsraum gemäß der Erfindung,

Fig. 3 in schematischer Darstellung zwei erfindungsgemäße Trennwände unterschiedlicher Ausführung.

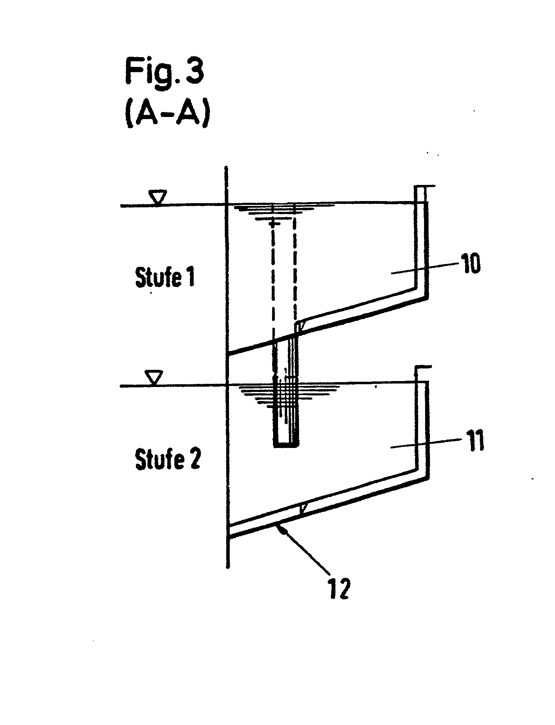

Der Reaktor gemäß Fig. 1 ist oben bereits näher erläutert worden. In den Fig. 2.1 bis 2.4 sind die Reaktionsräume 5.1 bis 5.4 des Reaktors gemäß Fig. 1 erfindungsgemäß durch Einbau von vertikalen Trennblechen 10 bzw. 11 (Fig. 3) in jeweils acht Reaktionssegmente 13 unterteilt. Jeder Reaktionsraum 5.1 bis 5.4 ist mit einer Leitung 3 für die dosierte Zugabe von Säure versehen, die die einzelnen Reaktionssegmente 13 individuell mit Säure versorgt. Ein Zulauf 7 für Starkchloratlösung 7, ein Eintritt 1 für Verdünnungsgas bzw. Spülgas, wie Luft, ein Austritt 4 für die gasförmigen Reaktionsprodukte $ClO_2$ und $Cl_2$. Überläufe 2 für Flüssigkeit, Glocken 6, Reaktionsräume 5, ein Ablauf 8 für die flüssigen Reaktionsprodukte, d.h. die verbrauchte Reaktionslösung (Schwachchloratlösung), sind analog Fig. 1.

Fig. 3 zeigt eine Anordnung unterschiedlicher Trennbleche 10 und 11. Während das eine Trennblech 10 flüssigkeitsdicht ist, hat das andere Trennblech 11 eine Öffnung 12 für den Flüssigkeitsdurchlauf.

Das Trennblech 10 trennt somit auch die Gaszuführung, um einen Flüssigkeitsausgleich über die Gaszuführung zu verhindern. Das Trennblech 10 ist einmal pro Stufe eingebaut. Das Trennblech 11 trennt dagegen nur den Flüssigkeitsraum. Die Flüssigkeit strömt durch eine Öffnung 12 unter den Trennblechen 11 von Reaktionssegment 13 zu Reaktionssegment 13 eines Reaktionsraumes 5. Das Trennblech 11 ist n-mal pro Stufe eingebaut.

Die sich aus dem erfindungsgemäßen Aufbau des Reaktors ergebenden Vorteile werden anhand der nachstehenden Ausführungsbeispiele näher und beispielhaft erläutert.

Es wurde zunächst ein herkömmlicher Reaktor mit horizontalen Glocken 6 ohne Trennbleche 10, 11 verwendet. Die Höhe der Glocken 6 betrug 800 mm. Für den Flüssigkeitsdurchlaß waren die Glocken 6 mit einem Überlauf 2 für Flüssigkeit versehen. Der Gasaustritt wurde durch Schlitze 9 in den Glocken 6 ermöglicht.

Ein Gemisch aus Natriumchlorat-Lösung und Salzsäure nachfolgender Zusammensetzung wurde unter üblichen Bedingungen von Druck und Temperatur in den Reaktor eingeführt:

$NaClO_3$ 280 g/l
NaCl 60 g/l
HCl 140 g/l
$H_2O$ 800 g/l

1. Die Ablaufkonzentration der Lösung wurde auf folgende Werte eingestellt:

$NaClO_3$ 140 g/l
NaCl 150 g/l
HCl 20 g/l
$H_2O$ 880 g/l

Um diese Ablaufkonzentration zu erhalten, wurden die Reaktionsbedingungen wie folgt gewählt:

- Sechsstufiger Reaktor (4 Reaktionsstufen, 2 Kochstufen) mit jeweils gleichen Verweilzeiten auf den Böden.

Gesamtverweilzeit: 6 h
Wirkungsgrad ca.: 89,5 %

2. Durch geringere Salzsäurezugabe in die Einlauflösung wurde die Auslauflösung wie folgt eingestellt:

$NaClO_3$ 180 g/l
NaCl 130 g/l
HCl 15 g/l
$H_2O$ 890 g/l

Die übrigen Reaktionsbedingungen waren wie unter Ziffer 1:
- Sechsstufiger Reaktor mit jeweils gleichen Verweilzeiten auf den Böden (4 Reaktionsstufen, 2 Kochstufen).
Gesamtverweilzeit: 6 h
Wirkungsgrad ca.: 91,5 %

3. Der gleiche Reaktor zeigte bei einer Salzsäurezugabe, die zum Abbau von $NaClO_3$ und HCl auf jeweils 10 g/l führte, einen Wirkungsgrad von 82 %.

4. Demgegenüber zeigt ein gleicher Reaktor, bei dem die oberen vier Glocken 6 durch Trennbleche 10, 11 erfindungsgemäß in jeweils sechs Segmente unterteilt waren, bei Zugabe der Salzsäure in die Einzelelemente bei einem Abbau auf je 10 g/l Chlorat bzw. Salzsäure einen Wirkungsgrad von ca. 95%.

Mit einem erfindungsgemäßen Reaktor kann somit der Wirkungsgrad des herkömmlichen Reaktors verbessert werden, wobei unter Wirkungsgrad der Prozentsatz des Natriumchlorates verstanden wird, der z.B. nach der Gleichung:

$NaClO_3 + 2\ HCl \rightarrow ClO_2 + 1/2\ Cl_2 + 1/2\ Cl_2 + NaCl1 + H_2O$
und nicht der Gleichung:
$NaClO_3 + 6\ HCl \rightarrow 3\ Cl_3 + NaCl + 3\ H_2O$

umgesetzt wird.

Bezugszeichenliste:

1 Eintritt für Verdünnungsgas/Spülgas
2 Flüssigkeit
3 Leitung für die Säurezufuhr
4 Austritt für Reaktionsprodukte
5 Reaktionsräume
6 Glocken
7 Zulauf für Chloratlösung
8 Ablauf für verbrauchte Reaktionslösung
9 Schlitz für Gasaustritt
10 Trennbleche
11 Trennbleche
12 Öffnung für Flüssigkeitsdurchlauf
13 Reaktionssegmente

**Patentansprüche**

1. Reaktor für die Herstellung von Chlordioxid aus Natriumchlorat durch Umsetzung mit einer Säure, wie Chlorwasserstoffsäure, unter Verwendung eines Spülgas-Gegenstromes, mit mehreren übereinander angeordneten und mit Öffnungen versehenen, die Rückvermischung von Gas und Flüssigkeit verhindernden Einbauten, dadurch gekennzeichnet, daß die Einbauten als in horizontalen Ebenen angeordnete Glocken (6) gestaltet sind, deren Reaktionsräume (5) durch senkrechte Trennbleche (10) in Reaktionssegmente (13) unterteilt sind.

2. Reaktor nach Anspruch 1, dadurch gekennzeichnet, daß die Trennbleche (10, 11) pro Glocke (6) bis auf eines mit Durchtrittsöffnungen (12) für die Reaktionsflüssigkeit versehen sind.

3. Reaktor nach Anspruch 1 oder 2, dadurch gekennzeichnet, daß von den Trennblechen (10, 11) neben den Überläufen (2) für die Reaktionsflüssigkeit eines flüssigkeitsdicht mit der Glocke (6) verbunden ist.

4. Reaktor nach den Ansprüchen 1 bis 3, dadurch gekennzeichnet, daß die Glocken (6) in voneinander unterschiedlichen Abständen angeordnet sind.

5. Reaktor nach einem der Ansprüche 1 bis 4, dadurch gekennzeichnet, daß jede Glocke (6) mit mindestens zwei Trennblechen (10, 11) versehen ist.

6. Reaktor nach einem der Ansprüche 1 bis 5, dadurch gekennzeichnet, daß jedes durch die Trennbleche (10, 11) gebildete Reaktionssegment (13) der Reaktionsräume (5) mit einer Leitung (3) für die Säurezufuhr versehen ist.

7. Reaktor nach einem der Ansprüche 1 bis 6, dadurch gekennzeichnet, daß ein einziger Zulauf (7) für die Chloratlösung vorgesehen ist.

## Claims

1. Reactor for the production of chlorine dioxide from sodium chlorate by reaction with an acid such as hydrochloric acid, using a cleansing gas counter current, having several components arranged one above the other, and provided with apertures, which prevent the back mixing of gas and liquid, characterised in that the components are designed as bubble caps (6) arranged in horizontal planes, their reaction chambers (5) being divided into reaction segments (13) by vertical separating plates (10).

2. Reactor according to claim 1, characterised in that the separating plates (10, 11) are provided with throughflow apertures (12) for the reaction liquid for each bubble cap (6) except one.

3. Reactor according to claim 1 or 2, characterised in that one of the separating plates (10, 11) near the overflows (2) for the reaction liquid is connected in fluid-tight manner to the bubble cap (6).

4. Reactor according to claims 1 to 3, characterised in that the bubble caps (6) are arranged at different distances from each other.

5. Reactor according to one of claims 1 to 4, characterised in that each bubble cap (6) is provided with at least two separating plates (10, 11).

6. Reactor according to one of claims 1 to 5, characterised in that each reaction segment (13) of the reaction chambers (5), which is formed by the separating plates (10, 11), is provided with a line (3) for supplying the acid.

7. Reactor according to one of claims 1 to 6, characterised in that a single inlet (7) is provided for the chlorate solution.

## Revendications

1. Réacteur pour la préparation de dioxyde de chlore à partir de chlorate de sodium par réaction avec un acide tel que de l'acide chlorhydrique, en utilisant un contre-courant de gaz de lavage, avec plusieurs chicanes disposées les unes au-dessus des autres, pourvues d'ouvertures et empêchant le remélangeage du gaz et du liquide, caractérisé en ce que les chicanes sont conformées en cloches (6) disposées dans des plans horizontaux, dont les espaces de réaction (5) sont divisés en segments de réaction (13) par des tôles de séparation (10) verticales.

2. Réacteur selon la revendication 1, caractérisé en ce que, pour chaque cloche (6), les tôles de séparation (10, 11), sauf une, sont pourvues d'ouvertures de passage (12) pour le liquide réactionnel.

3. Réacteur selon la revendication 1 ou 2, caractérisé en ce qu'une des tôles de séparation (10, 11), à côté des trop-pleins (2) pour le liquide réactionnel, est reliée à la cloche (6) de manière étanche au liquide.

4. Réacteur selon les revendications 1 à 3, caractérisé en ce que les cloches (6) sont disposées selon des intervalles différents les uns des autres.

5. Réacteur selon l'une des revendications 1 à 4, caractérisé en ce que chaque cloche (6) est pourvue d'au moins deux tôles de séparation (10, 11).

6. Réacteur selon l'une des revendications 1 à 5, caractérisé en ce que chaque segment de réaction (13) des espaces de réaction (5) formé par les tôles de séparation (10, 11) est pourvu d'une conduite (3) d'arrivée d'acide.

7. Réacteur selon l'une des revendications 1 à 6, caractérisé en ce qu'il est prévu une seule entrée (7) pour la solution de chlorate.

Fig.1

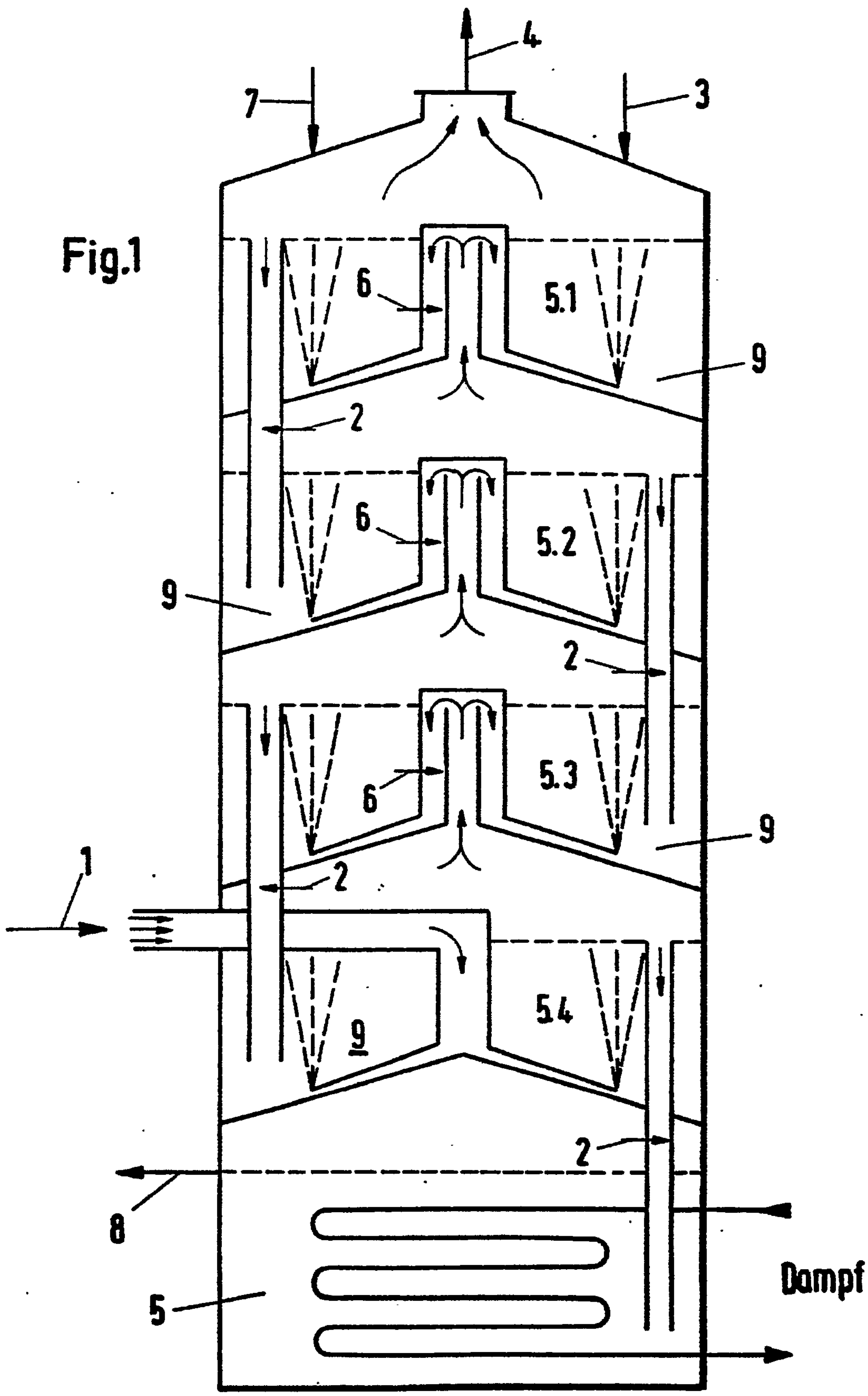

Fig. 2.1

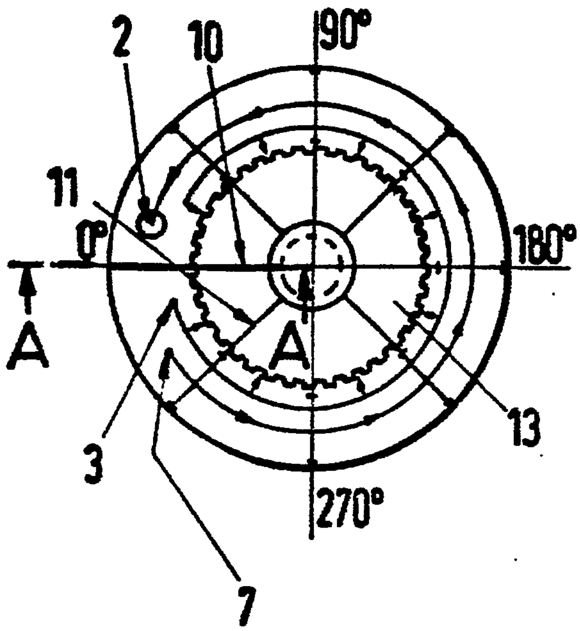


Fig. 2.2

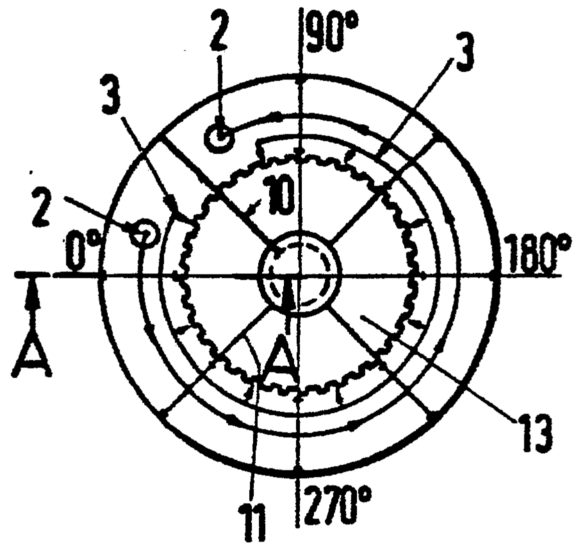


Fig. 2.3

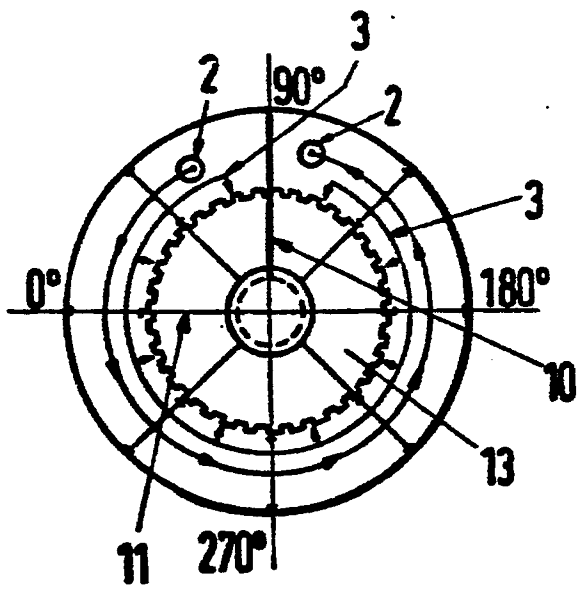


Fig. 2.4

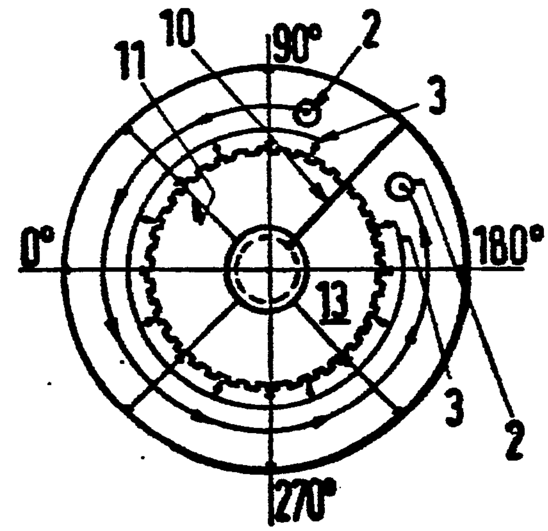

Fig. 3
(A-A)